# EUROPÄISCHE PATENTANMELDUNG

(11) **EP 2 712 697 A1**
(43) Veröffentlichungstag der Anmeldung: **02.04.2014**
(21) Anmeldenummer: 12186764.2
(22) Anmeldetag: 01.10.2012
(51) Int. Cl.: B23K 26/14, B05B 7/22

(54) **Pulverzuführeinrichtung für eine Laserpulverauftragsschweißvorrichtung**

(71) Anmelder: Siemens Aktiengesellschaft, 80333 München (DE)
(72) Erfinder: Arjakine, Nikolai, 10555 Berlin (DE); Burbaum, Bernd, 14612 Falkensee (DE); Melzer-Jokisch, Torsten, 15366 Neuenhagen bei Berlin (DE); Ott, Michael, 45470 Mülheim an der Ruhr (DE); Piegert, Sebastian, 10777 Berlin (DE)

(57) **Zusammenfassung**

Die Erfindung führt eine Pulverzuführeinrichtung (1) für eine Laserpulverauftragsschweißvorrichtung und eine Laserpulverauftragsschweißvorrichtung mit einer solchen Pulverzuführeinrichtung (1) ein. Die Pulverzuführeinrichtung (1) weist einen sich entlang einer Längsachse (2) der Pulverzuführeinrichtung (1) zu einem ersten Ende (4) verjüngenden Düsenkopf (3) mit einem Hohlraum (6) auf. Der Hohlraum (6) ist in einem Inneren des Düsenkopfes (3) radial um die Längsachse (2) angeordnet und verjüngt sich zu dem ersten Ende (4) des Düsenkopfes (3). Der Hohlraum (6) mündet in eine an dem ersten Ende (4) angeordnete ringförmige Öffnung (7) zum Auslassen eines Pulvers. Die Pulverzuführeinrichtung (1) besitzt eine Mehrzahl N von Pulverzuführrohrleitungen (8-1, 8-2, 8-3), die sich durch ein dem ersten Ende (4) des Düsenkopfes (3) gegenüberliegenden zweites Ende (5) des Düsenkopfes (3) zu dem Hohlraum (6) erstrecken und dazu ausgebildet sind, das Pulver von einem Pulverreservoir in den Hohlraum (6) zu leiten.

## Beschreibung

### Technisches Gebiet

Die Erfindung betrifft eine Pulverzuführeinrichtung für eine Laserpulverauftragsschweißvorrichtung und eine Laserpulverauftragsschweißvorrichtung mit einer solchen Pulverzuführeinrichtung sowie ihre Verwendung zum Ergänzen, Aufbauen oder Reparieren eines Werkstücks.

### Technischer Hintergrund

Beim Laserpulverauftragsschweißen wird ein feines metallisches Pulver auf eine Stelle eines Werkstücks aufgebracht und dort mit einem Laser aufgeschmolzen und mit dem Werkstück verschmolzen. Hierzu wird üblicherweise kontinuierlich eine bestimmte Menge Pulver aufgebracht und aufgeschmolzen, wobei die Pulverzuführung und der Laser über das beziehungsweise relativ zu dem Werkstück bewegt werden. Auf diese Weise kann dem Werkstück Material hinzugefügt werden, so dass es ergänzt oder repariert werden kann. Für eine Reparatur kann beispielsweise eine beschädigte Stelle des Werkstücks ausgebohrt und anschließend im Zuge des Laserpulverauftragsschweißens die ausgebohrte Stelle aufgefüllt werden. Auch ein schrittweises Aufbauen eines Werkstücks kann auf diese Weise erfolgen. Von besonderer Bedeutung sind solche Verfahren insbesondere dort, wo mit großen monokristallinen Werkstücken gearbeitet wird wie zum Beispiel bei der Fertigung oder dem sogenannten Refurbishment (Überarbeitung) von Gasturbinen.

Bei derartigen Verfahren hat die Auswahl geeigneter Parameter für die Menge des zuzuführenden Pulvers, die Laserleistung, den Laserdurchmesser und die Relativgeschwindigkeit, mit der die Pulverzuführung und der Laser über das Werkstück geführt werden, einen großen Einfluss auf die Eigenschaften des Prozesses. Für gute und vor allem reproduzierbare Ergebnisse ist eine genaue Einstellung und Einhaltung der gewählten Parameter von großer Wichtigkeit. Daher ist es unter anderem erstrebenswert, die innerhalb einer bestimmten Zeitspanne zugeführte Menge des Pulvers möglichst konstant halten zu können, so dass gleichbleibende Eigenschaften beim Aufschmelzen durch den Laser garantiert werden können. Beispielsweise kann die Leistung des Lasers so eingestellt werden, dass die bestimmte Menge des Pulvers vollständig aufgeschmolzen wird, so dass keine Kristallisationskeime in der Schmelze verbleiben, ohne es jedoch zu einer nennenswerten Verdampfung des aufgeschmolzenen Pulvers aufgrund einer zu hohen Laserleistung kommen zu lassen. Würde hierbei die Pulvermenge zu stark variieren, könnte es dazu kommen, dass entweder zuviel Material des Werkstücks aufgeschmolzen wird oder verdampft, oder aber, dass das aufgebrachte Pulver nicht vollständig aufgeschmolzen werden kann, so dass störende Kristallisationskeime in der Teilschmelze verbleiben, die eine epitaktische Fortsetzung der Kristallstruktur des unterliegenden Werkstücks stören.

Die üblicherweise eingesetzten konventionellen Düsensysteme zur Pulverzuführung in die Laserschmelze sind für den Einsatz im Rahmen von weiten Laserleistungsbereichen von ungefähr 100 Watt bis zu mehreren Kilowatt vorgesehen. Außerdem sind diese Düsensysteme für vielfältige Anwendungen wie beispielsweise Beschichtungsanwendungen, Werkstoffe oder Werkstoffkombinationen vorgesehen. Bei den hier im Vordergrund stehenden Anwendungen im Rahmen eines sogenannten Micro-Cladding-Prozesses werden relativ kleine Pulverzuführraten von etwa 100 bis 400 Milligramm pro Minute, ein relativ kleiner Pulverfocus von 600 Mikrometern und weniger in der Wechselwirkungszone von Laserstrahlung, Pulverwerkstoff und Grundwerkstoff benötigt. Die dabei eingesetzten Pulverwerkstoffe werden in einer begrenzten Kornfraktion von 25 bis 50 Mikrometern Durchmesser verwendet. Die Pulverpartikel sollen dabei möglichst sphärisch geformt sein. Wird zu sehr von diesen Vorgaben abgewichen, beispielsweise weil zu viele nichtsphärische Körner oder Körner mit einem Durchmesser kleiner als 20 Mikrometern enthalten sind, kann sich die Förderbarkeit des Pulvers in der Pulverdüse verschlechtern, wodurch die Pulverdüse verstopfen kann. Die Erfindung führt daher eine Pulverzuführeinrichtung ein, die speziell auf die Erfordernisse des Micro-Cladding-Prozesses abgestimmt ist.

### Zusammenfassung der Erfindung

Ein erster Aspekt der Erfindung führt daher eine Pulverzuführeinrichtung für eine Laserpulverauftragsschweißvorrichtung ein. Die Pulverzuführeinrichtung weist einen sich entlang einer Längsachse der Pulverzuführeinrichtung zu einem ersten Ende verjüngenden Düsenkopf mit einem Hohlraum auf. Der Hohlraum ist in einem Inneren des Düsenkopfes radial um die Längsachse angeordnet und verjüngt sich zu dem ersten Ende des Düsenkopfes. Der Hohlraum mündet in eine an dem ersten Ende angeordnete ringförmige Öffnung zum Auslassen eines Pulvers. Die Pulverzuführeinrichtung besitzt eine Mehrzahl N von Pulverzuführrohrleitungen, die sich durch ein dem ersten Ende des Düsenkopfes gegenüberliegenden zweites Ende des Düsenkopfes zu dem Hohlraum erstrecken und dazu ausgebildet sind, das Pulver von einem Pulverreservoir in den Hohlraum zu leiten.

Die Pulverzuführeinrichtung der Erfindung bietet den Vorteil einer besonders homogenen Pulververteilung in der Wechselwirkungszone, indem mehrere Pulverzuführrohrleitungen in einen Hohlraum innerhalb des Düsenkopfes münden, der sich wiederum in einer ringförmigen Öffnung zum bearbeiteten Werkstück hin öffnet. Die Pulverzuführeinrichtung kann ohne Hinterschneidungen innerhalb des Düsenkopfes gefertigt werden, so dass Pulveransammlungen und Verstopfungen, die den gleichmäßigen Transport des Pulvers behindern würden, vermieden werden können. Die Pulverzuführeinrichtung kann auch kippbar eingesetzt werden, wodurch eine 3D- beziehungsweise 360°-orbital-Bearbeitung möglich wird, was insbesondere bei unregelmäßig geformten Werkstücken vorteilhaft ist.

Ausführungsformen der erfindungsgemäßen Pulverzuführeinrichtung erlauben den Einsatz von Pulver mit einer kleineren Kornfraktion von beispielsweise 5 bis 20 Mikrometern Durchmesser sowie von Pulvern mit einem höheren Kleinanteil, beispielsweise mit einem Anteil von bis zu 5 Prozent von Körnern mit einem Durchmesser von weniger als 20 Mikrometern, ohne dass es zu Agglomerationen innerhalb der Pulverzuführeinrichtung kommt. Dadurch kann der Aufwand für das Sieben des Pulvers zur Verbesserung der Förderbarkeit des Pulvers reduziert werden, was eine kostengünstigere Durchführung des Micro-Cladding-Prozesses ermöglicht. Der Einsatz von feineren Pulvern (Kornfraktion 5 bis 20 Mikrometer Durchmesser) kann zudem neue Anwendungen für den Micro-Cladding-Prozess erschließen. Hierbei sind insbesondere kleinere oder größere Auftragsraten denkbar. Auch können andere Legierungen und Legierungskombinationen schweißbar werden.

Jede Pulverzuführrohrleitung ist vorzugsweise zu ihren beiderseitig benachbarten Pulverzuführrohrleitungen gleichbeabstandet angeordnet. Dadurch wird sichergestellt, dass entlang des Umfangs der ringförmigen Öffnung die gleiche Menge Pulver pro Zeiteinheit zugeführt wird, was eine besonders gleichmäßige Zuführung und Verteilung des Pulvers in der Wechselwirkungszone bedingt. In allen Ausführungsformen der erfindungsgemäßen Pulverzuführvorrichtung besitzt jede Pulverzuführrohrleitung denselben Durchmesser.

Jede Pulverzuführrohrleitung kann ausgebildet sein, das Pulver entlang einer Förderrichtung in den Hohlraum zu leiten. Dabei ist vorzugsweise eine Hauptrichtungskomponente der Förderrichtung parallel zu der Längsachse der Pulverzuführeinrichtung ausgerichtet. Dies bedeutet, dass das Pulver in den Pulverzuführrohrleitungen relativ zu der Längsachse der Pulverzuführeinrichtung eine kleinere Bewegung senkrecht zu der Längsachse als parallel zu der Längsachse vollzieht. Dadurch wird ein möglichst geringer Förderwiderstand der Pulverzuführrohrleitungen auf das geförderte Pulver bedingt. Ein hoher Förderwiderstand würde Stockungen des Pulvers und damit Pulveransammlungen und Verstopfungen begünstigen.

Dabei kann ein Winkel zwischen der Förderrichtung und der Längsache besonders bevorzugt höchstens 20 Grad betragen. Dadurch wird das Pulver über eine verhältnismäßig lange Strecke langsam an den Hohlraum im Düsenkopf herangeführt.

Ein Abstand zwischen einer beliebigen der Pulverzuführrohrleitungen und der Längsachse nimmt vorzugsweise von dem zweiten Ende des Düsenkopfes in Richtung auf das erste Ende des Düsenkopfes ab.

Die Mehrzahl N der Pulverzuführrohrleitungen beträgt vorzugsweise wenigstens drei. Eine größere Anzahl von Pulverzuführrohrleitungen macht die Fertigung der Pulverzuführeinrichtung schwieriger, führt jedoch zu einer gleichmäßigeren Verteilung des Pulvers entlang des Umfangs der ringförmigen Öffnung. Die Verwendung von nur einer oder zwei Pulverzuführrohrleitungen hat sich als unvorteilhaft erwiesen, da sich das Pulver hierbei nur schlecht verteilt.

Die ringförmige Öffnung weist bevorzugt einen Durchmesser von 1,5 Millimeter oder weniger auf. Der relativ geringe Durchmesser bedingt eine präzise Platzierung des Pulvers in der Wechselwirkungszone und einen Pulverfocus, der besonders für den Micro-Cladding-Prozess geeignet ist. Außerdem kann die erfindungsgemäße Pulverzuführeinrichtung besonders kompakt beziehungsweise kleiner aufgebaut werden, wenn der Durchmesser der ringförmigen Öffnung gering gewählt wird.

Der Hohlraum kann eine Außenfläche und eine Innenfläche aufweisen, welche jeweils wenigstens näherungsweise kegelstumpfförmig ausgebildet sind. Dadurch bekommt der Hohlraum selbst eine konische Form, was eine verbesserte Fokussierung des Pulvers ermöglicht.

Eine Querschnittsfläche des Hohlraums senkrecht zur Längsachse nimmt vorzugsweise zum ersten Ende der Pulverzuführeinrichtung hin ab, wodurch eine Fokussierung des Pulvers erreicht wird.

Besonders bevorzugt ist der Düsenkopf rotationssymmetrisch ausgebildet, was zu einer besonders gleichmäßigen Verteilung des Pulvers führt. Die Pulverzuführrohrleitungen sind dann vorzugsweise in Winkelabständen von 360 Grad geteilt durch die Mehrzahl N um die Längsachse herum angeordnet; bei N=3 beträgt der Winkelabstand zwischen jeweils zwei benachbarten Pulverzuführrohrleitungen demzufolge vorzugsweise 120 Grad.

Der Düsenkopf kann eine von dem Hohlraum getrennte Durchbohrung entlang der Längsachse aufweisen. Die Durchbohrung kann eine Öffnung am ersten Ende des Düsenkopfes besitzen. Die Durchbohrung bietet den Vorteil, dass der im Rahmen des Micro-Cladding-Prozesses zum Aufschmelzen des Pulvers eingesetzte Laser durch die Pulverzuführeinrichtung hindurch auf das Werkstück gerichtet werden kann, so dass der Zugang zu der Wechselwirkungszone nicht durch die Pulverzuführeinrichtung behindert wird. Außerdem wird eine Ausrichtung des Laserstrahle parallel zur Längsachse der Pulverzuführeinrichtung möglich, wodurch eine gleichmäßige Verteilung der Laserleistung über die Querschnittsfläche der Wechselwirkungszone erreicht wird, was zu gleichmäßigeren Ergebnissen führt.

Die Öffnung der Durchbohrung weist vorzugsweise einen Durchmesser von 1 Millimeter oder weniger (und weniger als der Durchmesser der ringförmigen Öffnung des Hohlraums) auf. Allgemein sollte der Durchmesser der Durchbohrung möglichst wenig größer als der Durchmesser des Lasers sein, da eine Vergrößerung des Durchmessers der Durchbohrung über das minimal notwendige Maß hinaus eine Platzierung des Pulvers in steigendem Abstand zum Zentrum des Laserstrahls zur Folge hat. Außerdem kann die erfindungsgemäße Pulverzuführeinrichtung besonders kompakt beziehungsweise kleiner aufgebaut werden, wenn der Durchmesser der Durchbohrung gering gewählt wird.

Ein zweiter Aspekt der Erfindung führt eine Laserpulverauftragsschweißvorrichtung ein. Die Laserpulverauftragsschweißvorrichtung besitzt ein Pulverreservoir für ein Pulver, eine Pulverzuführeinrichtung mit Pulverzuführrohrleitungen, die mit dem Pulverreservoir verbunden sind, und einen Laser, der ausgebildet ist, eine von der Pulverzuführeinrichtung auf ein Werkstück aufgetragene Menge des Pulvers aufzuschmelzen. Die Pulverzuführeinrichtung ist dabei gemäß dem ersten Erfindungsaspekt ausgebildet.

Ein weiterer Aspekt der Erfindung betrifft die Verwendung einer solchen Laserpulverauftragsschweißvorrichtung zum Ergänzen, Aufbauen oder Reparieren eines Werkstücks, vorzugsweise einer Gasturbinenkomponente.

### Kurzbeschreibung der Abbildungen

Die Erfindung wird im Folgenden anhand von Abbildungen eines Ausbildungsbeispiels näher beschrieben. Es zeigen:
Figur 1 eine erfindungsgemäße Pulverzuführeinrichtung für eine Laserpulverauftragsschweißvorrichtung im Längsschnitt; und
Die Figuren 2, 3 und 4 jeweils eine Querschnittszeichnung durch die Pulverzuführeinrichtung entlang der Querschnittslinien II, III und IV von Figur 1.

### Detaillierte Beschreibung der Abbildungen

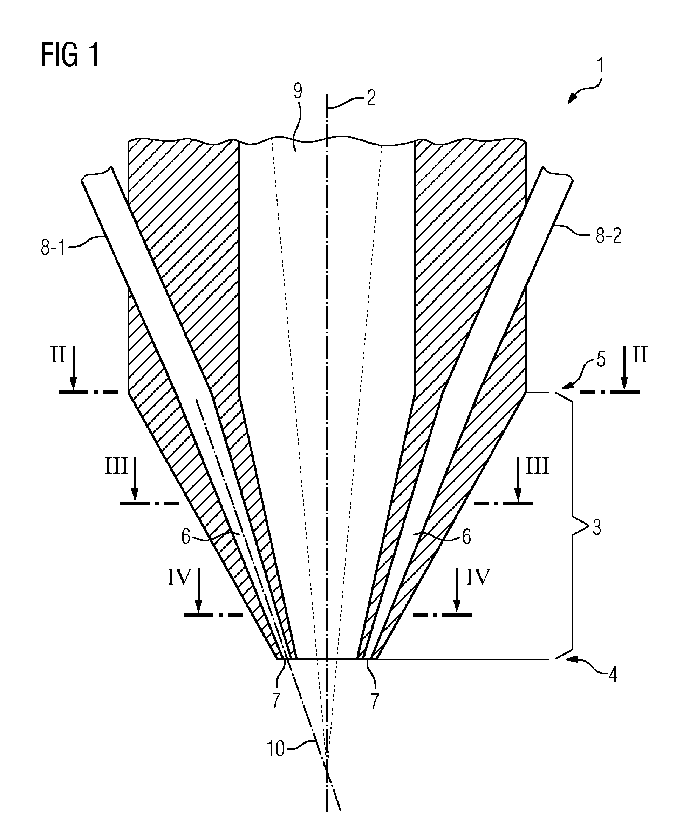

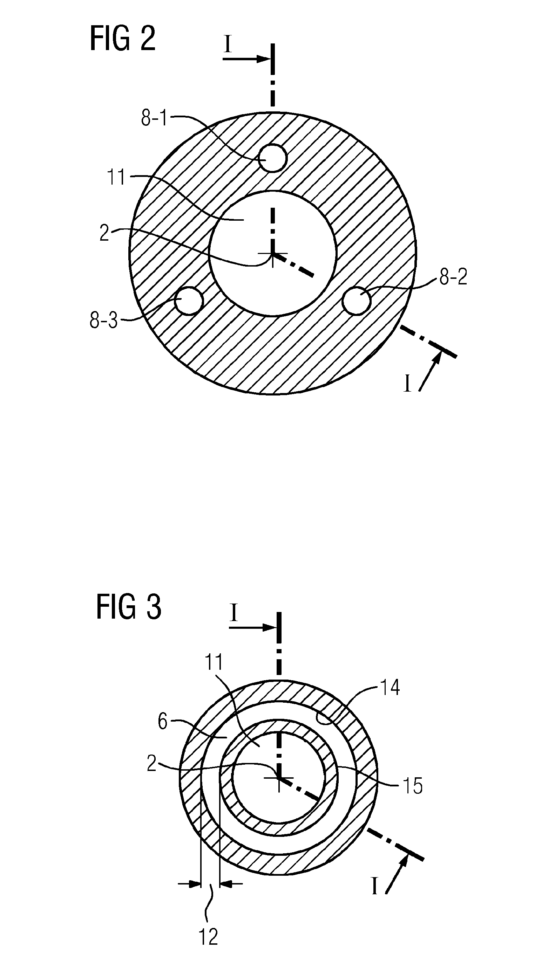

Figur 1 zeigt eine erfindungsgemäße Pulverzuführeinrichtung 1 für eine Laserpulverauftragsschweißvorrichtung im Längsschnitt. Die Pulverzuführeinrichtung 1 des Ausführungsbeispiels der Figur 1 ist um eine Längsachse 2 rotationssymmetrisch aufgebaut und besitzt einen Düsenkopf 3. Im Inneren des Düsenkopfes 3 ist ein Hohlraum 6 angeordnet, der sich an einem ersten Ende 4 des Düsenkopfes 3 in eine ringförmige Öffnung 7 mündet. Durch ein dem ersten Ende 4 gegenüberliegendes zweites Ende 5 reichen Pulverzuführrohrleitungen 8-1 und 8-2 in den Düsenkopf 3, die ein nicht dargestelltes Pulverreservoir mit dem Hohlraum 6 verbinden und ein im Pulverreservoir vorrätiges Pulver zu dem Hohlraum 6 leiten. In der Figur 1 nicht dargestellt ist eine Pulverzuführrohrleitung 8-3. Die genaue räumliche Lage der Pulverzuführrohrleitungen 8-1, 8-2 und 8-3 wird in Figur 2 klarer dargestellt.

Der Übergang zwischen den Pulverzuführrohrleitungen und dem Hohlraum wird bei vorteilhaften Ausführungsformen der Erfindung vorzugsweise linear ausgestaltet, so dass es das durch die Pulverzuführrohrleitungen zugeführte Pulver nicht an dem Übergang verklumpt. Der Hohlraum 6 des Ausführungsbeispiels der Figur 1 ist konisch ausgebildet, das heißt, er besitzt die Form eines Hohlkegelstumpfes, wobei ein Durchmesser des Hohlkegelstumpfes zum ersten Ende 4 hin abnimmt. Die Pulverzuführrohrleitungen 8-1, 8-2, 8-3 sind ausgebildet, das Pulver entlang einer jeweiligen Förderrichtung 10 zu leiten, die in Figur 1 nur für die Pulverzuführrohrleitung 8-1 dargestellt ist. Der Winkel zwischen der Förderrichtung 10 und der Längsachse 2 der Pulverzuführeinrichtung 1 beträgt vorzugsweise 20 Grad oder weniger.

Entlang der Längsachse 2 weist die Pulverzuführeinrichtung 1 des Ausführungsbeispiels eine Durchbohrung 11 auf, durch die ein Laserstrahl 9 durch die Pulverzuführeinrichtung 1 hindurch auf das durch die ringförmige Öffnung 7 austretende Pulver fokussiert werden kann, um das Pulver im Rahmen des Micro-Cladding-Prozesses aufzuschmelzen.

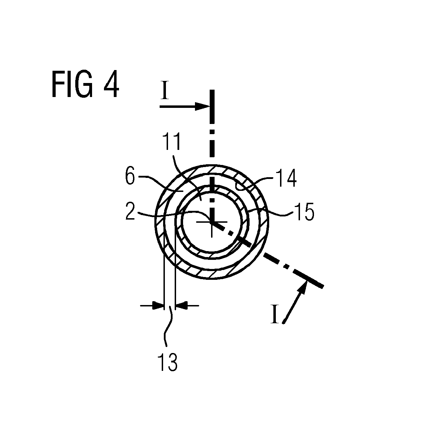

In Figur 1 sind drei Schnittebenen II, III und IV eingetragen, die den Ort der in den Figuren 2, 3 und 4 dargestellten Querschnitte durch die Pulverzuführeinrichtung 1 angeben, wobei die Schnittebene II der Figur 2, die Schnittebene III der Figur 3 und die Schnittebene IV der Figur 4 zugeordnet sind. In den Figuren 2, 3 und 4 ist eine Schnittfläche I eingetragen, an der entlang der Längsschnitt der Figur 1 verläuft.

Die Schnittebene II liegt ungefähr auf der Höhe des zweiten Endes 5 des Düsenkopfes 3 der Pulverzuführeinrichtung 1. Die Mitte des Querschnitts nimmt die Durchbohrung 11 ein. Im Inneren des Düsenkopfes sind die Pulverzuführrohrleitungen 8-1, 8-2 und 8-3 zueinander gleichbeabstandet angeordnet. Von der Längsachse 2 gemessen beträgt der Winkel zwischen jeweils zwei benachbarten Pulverzuführrohrleitungen 8-1, 8-2, 8-3 120 Grad.

Die Schnittebene III liegt zwischen dem ersten Ende 4 und dem zweiten Ende 5 des Düsenkopfes 3 und verläuft durch den Hohlraum 6, der hier eine ringförmige Querschnittsfläche besitzt. Eine Außenfläche 14 des Hohlraums 6 besitzt einen ersten Abstand 12 zu einer Innenfläche 15 des Hohlraums 6. Im gezeigten Beispiel ist die Querschnittsfläche der Durchbohrung 11 in der Schnittebene III geringer als die in der Schnittebene II. Ebenso kann die Durchbohrung 11 aber auch über ihre Länge eine konstante Querschnittsfläche aufweisen.

Die Schnittebene IV schneidet den Düsenkopf 3 nahe an seinem ersten Ende 4. Ein zweiter Abstand 13 zwischen der Außenfläche 14 und der Innenfläche 15 des Hohlraums 6 ist im gezeigten Beispiel kleiner als der erste Abstand 12 in Figur 3. Es ist aber auch möglich, den Durchmesser des Hohlraums 6 konstant zu halten. Da sich der Düsenkopf 3 zu seinem ersten Ende 4 hin verjüngt und mit ihm der Hohlraum 6, verringert sich die Querschnittsfläche des Hohlraums ebenfalls, wodurch das durch die Pulverzuführrohrleitungen 8-1, 8-2, 8-3 zugeführte Pulver über die gesamte Querschnittsfläche des Hohlraums 6 verteilt wird. Indem der Winkel zwischen der Förderrichtung 10 und der Längsachse 2 gering gewählt wird, erhöht sich die Strecke zwischen der Einmündung der Pulverzuführrohrleitungen 8-1, 8-2, 8-3, was eine gute Verteilung des Pulvers über die Querschnittsfläche des Hohlraums 6 begünstigt.

Obwohl die Erfindung im Detail durch Ausführungsbeispiele von bevorzugten Ausführungsformen näher illustriert und beschrieben wurde, ist die Erfindung nicht durch die offenbarten Beispiele eingeschränkt. Variationen der Erfindung können vom Fachmann aus den gezeigten Ausführungsbeispielen abgeleitet werden, ohne den Schutzumfang der Erfindung, wie er in den Ansprüchen definiert wird, zu verlassen.

## Patentansprüche

1. Eine Pulverzuführeinrichtung (1) für eine Laserpulverauftragsschweißvorrichtung,
die Pulverzuführeinrichtung (1) aufweisend einen sich entlang einer Längsachse (2) der Pulverzuführeinrichtung (1) zu einem ersten Ende (4) verjüngenden Düsenkopf (3) mit einem in einem Inneren des Düsenkopfes (3) radial um die Längsachse (2) angeordneten, sich zu dem ersten Ende (4) des Düsenkopfes (3) verjüngenden Hohlraum (6), der in eine an dem ersten Ende (4) angeordnete ringförmige Öffnung (7) zum Auslassen eines Pulvers mündet,
wobei die Pulverzuführeinrichtung (1) eine Mehrzahl N von Pulverzuführrohrleitungen (8-1, 8-2, 8-3) aufweist, die sich durch ein dem ersten Ende (4) des Düsenkopfes (3) gegenüberliegenden zweites Ende (5) des Düsenkopfes (3) zu dem Hohlraum (6) erstrecken und dazu ausgebildet sind, das Pulver von einem Pulverreservoir in den Hohlraum (6) zu leiten.

2. Die Pulverzuführeinrichtung (1) von Anspruch 1,
bei der jede Pulverzuführrohrleitung (8-1, 8-2, 8-3) zu ihren beiderseitig benachbarten Pulverzuführrohrleitungen (8-1, 8-2, 8-3) gleichbeabstandet angeordnet ist.

3. Die Pulverzuführeinrichtung (1) von einem der Ansprüche 1 oder 2,
bei der jede Pulverzuführrohrleitung (8-1, 8-2, 8-3) ausgebildet ist, das Pulver entlang einer Förderrichtung (10) in den Hohlraum (6) zu leiten,
wobei eine Hauptrichtungskomponente der Förderrichtung (10) parallel zu der Längsachse (2) der Pulverzuführeinrichtung (1) ausgerichtet ist.

4. Die Pulverzuführeinrichtung (1) von Anspruch 3,
bei der ein Winkel zwischen der Förderrichtung (10) und der Längsache (2) höchstens 20° beträgt.

5. Die Pulverzuführeinrichtung (1) von einem der vorhergehenden Ansprüche,
bei der ein Abstand zwischen einer beliebigen der Pulverzuführrohrleitungen (8-1, 8-2, 8-3) und der Längsachse (2) von dem zweiten Ende (5) des Düsenkopfes (3) in Richtung auf das erste Ende (4) des Düsenkopfes (3) abnimmt.

6. Die Pulverzuführeinrichtung (1) von einem der vorhergehenden Ansprüche,
bei der die Mehrzahl N wenigstens drei beträgt.

7. Die Pulverzuführeinrichtung (1) von einem der vorhergehenden Ansprüche,
bei der die ringförmige Öffnung (7) einen Durchmesser von 1,5 Millimeter oder weniger aufweist.

8. Die Pulverzuführeinrichtung (1) von einem der vorhergehenden Ansprüche,
bei der der Hohlraum (6) eine Außenfläche (14) und eine Innenfläche (15) aufweist, welche jeweils wenigstens näherungsweise kegelstumpfförmig ausgebildet sind.

9. Die Pulverzuführeinrichtung (1) von einem der vorhergehenden Ansprüche,
bei der eine Querschnittsfläche des Hohlraums (6) senkrecht zur Längsachse (2) zum ersten Ende (4) der Pulverzuführeinrichtung (1) hin abnimmt.

10. Die Pulverzuführeinrichtung (1) von einem der vorhergehenden Ansprüche,
bei der der Düsenkopf (3) rotationssymmetrisch ausgebildet ist.

11. Die Pulverzuführeinrichtung (1) von einem der vorhergehenden Ansprüche,
bei der der Düsenkopf (3) eine von dem Hohlraum (6) getrennte Durchbohrung (11) entlang der Längsachse (2) aufweist,
wobei die Durchbohrung (11) eine Öffnung am ersten Ende (4) des Düsenkopfes (3) besitzt.

12. Die Pulverzuführeinrichtung (1) von Anspruch 11,
bei der die Öffnung der Durchbohrung (11) einen Durchmesser von 1 Millimeter oder weniger aufweist.

13. Eine Laserpulverauftragsschweißvorrichtung mit einem Pulverreservoir für ein Pulver,
einer Pulverzuführeinrichtung (1) mit Pulverzuführrohrleitungen (8-1, 8-2, 8-3), die mit dem Pulverreservoir verbunden sind, und
einem Laser, der ausgebildet ist, eine von der Pulverzuführeinrichtung (1) auf ein Werkstück aufgetragene Menge des Pulvers aufzuschmelzen,
**dadurch gekennzeichnet, dass**
die Pulverzuführeinrichtung (1) gemäß einem der vorhergehenden Ansprüche ausgebildet ist.

14. Verwendung einer Laserpulverauftragsschweißvorrichtung gemäß Anspruch 13 zum Ergänzen, Aufbauen oder Reparieren eines Werkstücks, vorzugsweise einer Gasturbinenkomponente.
